# FASCICULE DE BREVET EUROPEEN

(11) **EP 3 619 408 B1**
(45) Date de publication et mention de la délivrance du brevet: **27.01.2021**
(21) Numéro de dépôt: 18728206.6
(22) Date de dépôt: 02.05.2018
(51) Int. Cl.: F02C 9/00, G05B 23/02

(54) **SYSTÈME ET PROCÉDÉ DE SURVEILLANCE D'UNE TURBOMACHINE À DÉTECTION D'ANOMALIE CORRIGÉE PAR UN FACTEUR D'USURE**
SYSTEM UND VERFAHREN ZUR ÜBERWACHUNG EINER TURBOMASCHINE MIT DURCH EINEN VERSCHLEISSFAKTOR KORRIGIERTER ANOMALITÄTSERKENNUNG
SYSTEM AND METHOD FOR MONITORING A TURBOMACHINE WITH ANOMALY DETECTION CORRECTED BY A WEAR FACTOR

(30) Priorité: 05.05.2017 FR 1754001
(43) Date de publication de la demande: 11.03.2020
(73) Titulaire: Safran Aircraft Engines, 75015 Paris (FR)
(72) Inventeur: TRAN, Hang-Mi, 77550 Moissy-Cramayel (FR)
(74) Mandataire: Brevalex
(86) Numéro de dépôt international: PCT/FR2018/051085
(87) Numéro de publication internationale: WO 2018/202991

(56) Documents cités:
- EP-A1- 2 006 202
- WO-A1-2015/197944
- FR-A1- 2 996 254

## Description

### DOMAINE TECHNIQUE

Le domaine de l'invention est celui des systèmes de suivi de l'état de santé d'une machine, telle qu'une turbomachine d'aéronef. L'invention concerne plus particulièrement un système automatisé d'aide à la décision pour la réalisation d'opérations de maintenance d'un moteur d'aéronef.

### ÉTAT DE LA TECHNIQUE ANTÉRIEURE

Le suivi de l'état de santé d'une machine vise à en améliorer la sécurité et la fiabilité. Pour ce qui concerne les moteurs d'aéronefs en particulier, cette surveillance vise à éviter ou à limiter l'arrêt en vol (« in-flight shutdown », IFSD), à réduire les retards ou annulation des vols (« delays and cancellations », D&C), et plus particulièrement à faciliter la maintenance du moteur, de manière préventive, en anticipant les défaillances et en identifiant les composants fautifs ou défaillants.

Afin de surveiller l'état de santé d'un moteur d'aéronef, différents dispositifs de surveillance ou de détection d'anomalie sont utilisés pour vérifier le bon fonctionnement des différents composants du moteur. On retrouve par exemple, un dispositif de surveillance pour analyser le comportement du processus d'allumage, un autre pour analyser la température des gaz, un autre encore pour détecter le colmatage des filtres, et un autre pour analyser la consommation d'huile et de carburant, etc.

Les données générées par ces dispositifs de détection et de surveillance sont reçues au sol via des rapports de vol et y sont exploitées par des systèmes de maintenance au moyen d'algorithmes de suivi de l'état de santé (« health monitoring »). Ces algorithmes lèvent des alertes lorsqu'ils détectent une anomalie (prémices d'une panne ou plus généralement d'une dégradation). Ces alertes sont ensuite exploitées au sol par des experts dédiés au suivi des flottes pour qu'ils vérifient les capacités opérationnelles du moteur en fonction des alertes levées.

Le principe général de ces algorithmes est une approche par seuillage des variables surveillées qui sont des données physiques brutes relatives au fonctionnement du moteur, couplée à une étape de confirmation de dépassement de seuil (confirmation d'anomalie) avant de lever une alarme. Cette approche, bien que simple, est tout à fait performante si on veut limiter au maximum les risques de non détection d'une anomalie réelle dans le comportement du moteur.

Il existe classiquement trois règles de confirmation de dépassement de seuil :
- Type I : On se fixe un nombre entier k. Si sur l'ensemble du signal on observe au moins k dépassements, alors l'alarme est levée ;
- Type II : On se fixe un nombre entier k. S'il existe un ensemble de k points de mesure successifs au-delà du seuil, alors l'alarme est levée ;
- Type III : On se fixe deux nombres entiers k et n avec k plus petit que n. S'il existe un ensemble de n points de mesure successifs parmi lesquels au moins k sont au-delà du seuil, alors l'alarme est levée.

Une fois une alarme levée, un expert dédié au suivi des flottes doit venir vérifier les capacités opérationnelles du moteur. Cet expert vient plus précisément analyser l'évolution d'un certain nombre de paramètres de fonctionnement du moteur afin de confirmer les prémices de panne, et ainsi éviter l'émission de fausses alarmes. En cas de doute, un expert du Bureau d'Etudes peut être sollicité. Si la présence d'une anomalie est confirmée, l'expert rédige un rapport (« Customer Notification Report », CNR) qui contient les données considérées, l'analyse faite ainsi que ses recommandations de maintenance. Si la présence d'une anomalie n'est pas confirmée par l'expert, il ne donne pas de suite à l'alarme. On dit alors que l'alarme est une fausse alarme.

Ainsi, suite à la levée d'une alarme en conséquence d'une confirmation de dépassement de seuil, et avant toute action de maintenance, l'expert peut être amené à demander à l'exploitant du moteur de décharger des données moteur non déjà reçues via les rapports de vol afin de pouvoir inspecter le moteur susceptible de présenter des prémices d'une dégradation. Un tel déchargement peut ne pas pouvoir être réalisé rapidement selon la disponibilité de l'avion.

Suite à la levée d'une alarme, la confirmation de celle-ci nécessite ainsi la réalisation de procédures manuelles basées sur des déchargements de données et des analyses d'experts. Ces procédures présentent l'inconvénient d'un temps de traitement et d'un coût non négligeables. L'analyse de l'expert dédié au suivi des flottes est dans tous les cas nécessaire en cas de détection des prémices d'une dégradation, y compris lorsqu'il ne s'agit au final que d'une fausse alarme.

EP 2 006 202 A1 divulgue un exemple de la détection d'usure dans un moteur d'aéronef.

### EXPOSÉ DE L'INVENTION

L'invention a pour objectif de permettre une sollicitation moindre des experts dédiés au suivi des flottes suite à la détection des prémices d'une dégradation, conduisant à une réduction du coût du suivi de l'état de santé sans pour autant en réduire la fiabilité.

Elle propose pour cela un système de suivi de l'état de santé d'un moteur d'aéronef sous surveillance selon la revendication 1, un procédé selon la revendication 9 et un produit programme d'ordinateur selon la revendication 10. Le système comprend une unité de détection d'anomalies configurée pour analyser des paramètres de fonctionnement du moteur et pour lever une alarme cas de dépassement de seuil par un résultat d'analyse de l'un des paramètres de fonctionnement du moteur, l'alarme étant associée à une probabilité d'occurrence d'un type de dégradation donné du moteur. Le système comprend une unité de suivi de conditions de fonctionnement du moteur configurée pour déterminer un taux d'usure du moteur, et une unité de confirmation d'alarme configurée pour pondérer ladite probabilité d'occurrence par le taux d'usure déterminé.

Certains aspects préférés mais non limitatifs de ce système sont les suivants :
- l'unité de détection d'anomalies est configurée pour lever une alarme si un résultat d'analyse de l'un des paramètres de fonctionnement du moteur respecte une règle de confirmation de dépassement de seuil, par exemple l'une des règles de Type I, Type II ou Type III mentionnée précédemment ;
- l'unité de suivi de conditions de fonctionnement du moteur est configurée pour déterminer l'âge du moteur depuis sa première mise en fonctionnement et en déduire un taux d'usure de mode nominal, pour déterminer le temps passé par le moteur dans des conditions critiques de fonctionnement depuis sa première mise en fonctionnement et en déduire un taux d'usure de mode dégradé, et pour déduire le taux d'usure du moteur en combinant le taux d'usure de mode dégradé avec le taux d'usure de mode nominal ;
- les conditions critiques de fonctionnement comprennent au moins un fonctionnement parmi un fonctionnement en dehors d'une gamme nominale de température, un fonctionnement en dehors d'une gamme nominale d'hygrométrie, un fonctionnement en dehors d'une gamme nominale de pression et un fonctionnement en contact avec des produits corrosifs.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre de manière schématique un système de suivi de l'état de santé d'un moteur d'aéronef selon un mode de réalisation possible de l'invention ;
- les figures 2 et 3 illustrent l'impact de l'usure d'un moteur d'aéronef sur son potentiel au cours de sa durée de vie respectivement en mode nominal et en mode dégradé ;
- la figure 4 illustre de manière schématique un procédé d'aide à la décision pour la maintenance d'un moteur d'aéronef selon un mode de réalisation possible de l'invention.

### EXPOSÉ DÉTAILLÉ DE MODES DE RÉALISATION PARTICULIERS

L'invention propose d'une manière générale un outil à même de fournir de manière automatisée des informations utiles pour une prise de décision relative à des opérations de maintenance d'un moteur d'aéronef.

Dans ce cadre, l'invention propose un système de suivi de l'état de santé d'un moteur d'aéronef qui permet de diminuer le nombre de fausses alarmes sans modifier le taux de détection des anomalies (vraies alarmes). Pour ce faire, le système se place en aval d'une unité de détection d'anomalies qui lève les alarmes. On évite ainsi de générer de nouvelles alarmes, et le taux de détection des anomalies n'est pas modifié. Le système met alors en œuvre une correction des alarmes levées pour favoriser ces alarmes lorsque le moteur est usé et donc susceptible d'être dégradé, et défavoriser ces alarmes lorsque le moteur est peu usé et donc peu susceptible d'être dégradé.

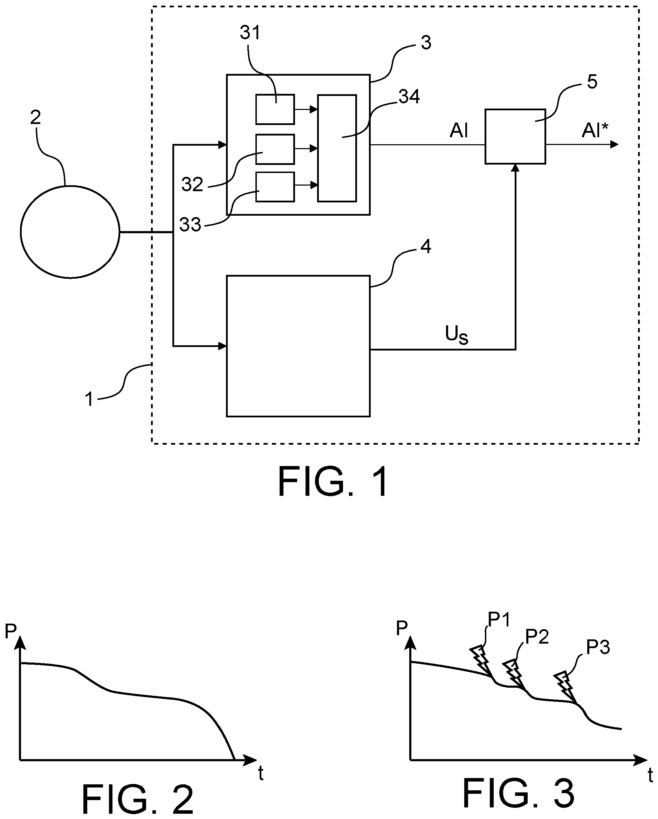

En référence à la figure 1, l'invention concerne plus particulièrement un système 1 de suivi de l'état de santé d'un moteur d'aéronef 2. Le système 1 comprend une unité 3 de détection d'anomalies configurée pour analyser des paramètres de fonctionnement du moteur 2 et pour lever une alarme Al en cas de dépassement de seuil par un résultat d'analyse d'un paramètre de fonctionnement du moteur.

L'unité 3 de détection d'anomalies comporte divers modules de détection d'anomalies 31, 32, 33. Ces modules reçoivent des paramètres de fonctionnement relatifs à différents composants du moteur, et sont configurés pour déterminer des indicateurs à partir de ces paramètres et détecter des anomalies dans ces indicateurs. Ces indicateurs sont ainsi désignés par le terme d'indicateurs d'anomalie.

Les indicateurs d'anomalie produits par les modules 31, 32, 33 sont des résultats de calculs, généralement des sorties d'algorithmes, ou des résultats de tests statistiques. Il s'agit par exemple de sorties d'algorithmes de suivi de l'état de santé ou des synthèses ou résultats d'analyses d'essais.

Typiquement, pour la surveillance des moteurs de flottes d'avions, les mesures réalisées au cours de chaque vol sont analysées par un gestionnaire de flotte. Dans la présente invention, ces analyses sont réalisées par les modules de détection d'anomalies 31, 32, 33 qui implémentent par exemple des algorithmes de détection de rupture dans le comportement du moteur de vol à vol. Il y a plusieurs sortes de ruptures (franche ou progressive), plusieurs façons de les observer (long ou court terme), et une centaine de signaux à regarder séparément ou en relation. On dispose donc d'une panoplie de modules de détection d'anomalie (plusieurs milliers) qui fournissent tous, après chaque vol, leurs indicateurs d'anomalie, chacun pouvant être associé à un indicateur de confiance.

Ces indicateurs d'anomalie sont fournis à une unité de déclenchement d'alarme 34. Cette unité 34 est configurée pour lever une alarme Al si le résultat de l'analyse de l'un des paramètres de fonctionnement du moteur est confirmé en ce sens qu'il respecte une règle de confirmation de dépassement de seuil. Il s'agit par exemple de l'une des règles mentionnées précédemment : de type I (la règle de dépassement de seuil correspond à la détection d'un dépassement de seuil lors de k cycles de fonctionnement au cours de la durée de vie du moteur, k étant un entier naturel positif), de type II (la règle de dépassement de seuil correspond à la détection d'un dépassement de seuil lors de k cycles de fonctionnement successifs du moteur, k étant un entier naturel positif) ou de type III (la règle de dépassement de seuil correspond à la détection d'un dépassement de seuil sur k cycles de fonctionnement parmi n cycles de fonctionnement successifs, k et n étant des entiers naturels positifs, n étant supérieur à k). Prenant l'exemple d'une turbomachine, un cycle de fonctionnement correspond typiquement à un vol de l'avion embarquant la turbomachine.

Une alarme levée Al par l'unité de déclenchement d'alarme 34 est associée à une probabilité d'occurrence d'un type de dégradation donné du moteur, noté Pᵢₙᵢₜ.

Selon l'invention, le système de surveillance 1 comprend en outre une unité 4 de suivi de conditions de fonctionnement du moteur configurée pour déterminer un taux d'usure Uₛ du moteur, ainsi qu'une unité 5 de confirmation d'alarme configurée pour pondérer ladite probabilité d'occurrence Pᵢₙᵢₜ par le taux d'usure déterminé. L'unité de confirmation d'alarme lève ainsi une alarme corrigée Al* correspondant à la probable occurrence dudit type de dégradation donné selon une probabilité d'occurrence corrigée P_{corr} = Pᵢₙᵢₜ ^{∗} Uₛ.

Afin de fixer les idées, on notera qu'avec un taux d'usure de 5% par exemple le moteur a encore quasiment tout son potentiel et qu'il n'y a pas de raison de le suspecter d'être dégradé. A contrario, avec un taux d'usure de 95%, le moteur est en fin de vie, son potentiel restant est très faible et il y a tout lieu de le suspecter de présenter des dégradations.

L'unité de suivi de conditions de fonctionnement du moteur 4 peut notamment être configurée pour déterminer l'âge du moteur depuis sa première mise en fonctionnement et en déduire un taux d'usure de mode nominal, i.e. répondant à des conditions nominales de fonctionnement. On a ainsi représenté sur la figure 2 un exemple de l'évolution du potentiel restant P d'un moteur au cours du temps t, le moteur étant soumis à des conditions nominales de fonctionnement. Exprimé en pourcentage du potentiel initial du moteur, le potentiel restant P permet de remonter au taux d'usure Uₛ selon Uₛ=100-P.

L'unité de suivi de conditions de fonctionnement du moteur 4 peut également être configurée pour déterminer le temps passé par le moteur dans des conditions critiques de fonctionnement depuis sa première mise en fonctionnement, en déduire un taux d'usure de mode dégradé, et déterminer le taux d'usure Uₛ du moteur à partir du taux d'usure de mode dégradé et du taux d'usure de mode nominal. Le taux d'usure Uₛ du moteur est par exemple déterminé en venant combiner, par exemple en venant simplement les ajouter l'un à l'autre, le taux d'usure de mode dégradé avec le taux d'usure de mode nominal.

A titre d'exemple, le taux d'usure de mode nominal et le taux d'usure de mode dégradé peuvent être déterminés à partir de mesures relevées par un ou des capteurs, des signaux de mesure relatifs à ce ou ces capteurs étant alors transmis à l'unité de suivi de conditions de fonctionnement du moteur 4 afin de connaitre l'état de dégradation des éléments sujets à usure.

Typiquement, ce type de capteur mesure les paramètres génériques locaux relatifs à l'endommagement ou à l'usure du composant sur lequel il est fixé. Il réalise ensuite un calcul d'usage et stocke le résultat de ce calcul ainsi que l'historique associé. Alternativement, ce calcul d'usure peut également être opéré par l'unité 4 qui recueille les données et détermine le taux d'usure à partir des signaux de mesure transmis par le ou les capteurs. Avantageusement, le déchargement des données depuis le capteur vers l'unité de suivi de conditions de fonctionnement du moteur 4 est réalisé au moyen d'une liaison sans fil. Chaque capteur peut ainsi être associé à une grandeur à mesurer, relative au composant d'aéronef sujet à l'usure. Chacun de ces capteurs est propre à délivrer, au cours du temps, ce signal de mesure représentatif de la valeur de la grandeur associée. Il s'agit de grandeurs physiques nécessaires au calcul de l'usure. Par exemple, une telle grandeur est une grandeur à valeurs continues telle qu'une température de masse du composant, une amplitude de vibration subie par le composant, une élongation du composant, une température ambiante au voisinage du composant, un débit de fluide (tel que de l'air, de l'huile ou du carburant), une pression de fluide ou un régime de la turbomachine. Selon un autre exemple, une telle grandeur est une grandeur à valeurs discrètes, telle qu'une phase de vol, ou un état de marche de la turbomachine.

Dans un mode réalisation, l'unité 4 de suivi de conditions de fonctionnement du moteur 4 estime le taux d'usure de mode dégradé à partir des données de mesure relatives à des conditions critiques de fonctionnement envoyés par le ou les capteurs du ou des composants surveillés, à savoir lorsque les composant surveillés fonctionnent en dehors d'une gamme nominale d'une grandeur physique donné. Par exemple, si la gamme nominale de température d'un composant est comprise entre 10°C et 20°C, l'unité 4 utilise les données transmises par le capteur afin de calculer le taux d'usure du mode dégradé sur la base des données de mesure du composant à surveiller lorsque celui-ci fonctionne en dehors de cette gamme nominale. De manière analogue, l'unité 4 de suivi de conditions de fonctionnement du moteur 4 peut estimer le taux d'usure de mode nominal à partir des données relatives à des conditions nominales de fonctionnement envoyés par le capteur du composant surveillé, à savoir lorsque le composant surveillé fonctionne dans la gamme nominale d'une grandeur physique donné. Par exemple, si la gamme nominale de température d'un composant est comprise entre 10°C et 20°C, l'unité 4 utilise les données transmises par le capteur afin de calculer le taux d'usure du mode nominal en se basant sur les données de mesure du composant à surveiller correspondant au fonctionnement du composant à surveiller lorsque celui-ci fonctionne à l'intérieur de cette gamme nominale.

Des données temporelles peuvent être déduites à partir des données de mesure relevées par le capteur. Par exemple, ces données temporelles peuvent permettre d'approximer le temps d'utilisation du moteur à partir des données de mesure, en comparant par exemple les données de mesure à des données correspondant à un état d'utilisation du composant. Une mesure de température relevée sur un composant peut par exemple être comparée à une plage de valeurs de température correspondant à un état d'utilisation dudit composant, la comparaison permettant de déduire si le composant est dans un état d'utilisation ou non.

L'exploitation de ces données temporelles associées aux données de mesure relatives à des conditions critiques de fonctionnement et aux données de mesure relatives à des conditions nominales de fonctionnement peut ainsi permettre d'estimer respectivement le taux d'usure du mode dégradé et le taux d'usure de mode nominal. Cette estimation peut être basée en comparant les valeurs de ces données à des valeurs prédéterminées stockées dans l'unité 4 de suivi de conditions de fonctionnement du moteur 4, la comparaison permettant d'évaluer un pourcentage ou un indice représentatif de l'usure.

Comme indiqué plus haut dans la description, le taux d'usure Uₛ peut par exemple être déterminé en venant combiner, par exemple en venant simplement les ajouter l'un à l'autre, le taux d'usure de mode dégradé avec le taux d'usure de mode nominal. Ce taux d'usure Uₛ peut également être basé uniquement sur le taux d'usure du mode dégradé ou sur le taux d'usure de mode nominal.

On a ainsi représenté sur la figure 3 un exemple d'évolution du potentiel restant P d'un moteur au cours du temps t, le moteur étant soumis à des conditions nominales de fonctionnement sauf pendant trois périodes où il est soumis à des conditions critiques de fonctionnement P1, P2, P3 et où il vient davantage se dégrader.

La caractérisation du potentiel en mode nominal, la définition des conditions critiques de fonctionnement et la caractérisation de leur l'impact en termes de dégradation du potentiel sont propres à chaque moteur et à son environnement de fonctionnement. Le potentiel restant P d'un moteur soumis à des conditions nominales de fonctionnement évolue par exemple de manière linéaire ou asymptotique au cours du temps t. Si besoin, des essais peuvent être réalisés en procédant à des dégradations volontaires et en venant évaluer leur impact sur le potentiel du moteur.

A titre d'exemples, on peut retenir pour une turbomachine l'une et/ou l'autre des conditions critiques de fonctionnement suivantes :
- un fonctionnement en dehors d'une gamme nominale de température ;
- un fonctionnement en dehors d'une gamme nominale d'hygrométrie ;
- un fonctionnement en dehors d'une gamme nominale de pression ; et
- un fonctionnement en contact avec des produits corrosifs.

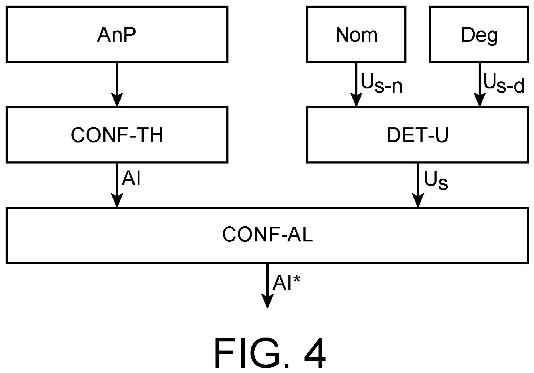

L'invention n'est pas limitée au système tel que précédemment décrit, mais s'étend également à un procédé de suivi de l'état de santé d'un moteur d'aéronef. En référence à la figure 4, ce procédé comprend une étape de détection d'anomalies qui comporte une analyse « AnP » de paramètres de fonctionnement du moteur et une levée d'alarme Al en cas de dépassement de seuil par un résultat d'analyse de l'un des paramètres de fonctionnement du moteur, l'alarme étant associée à une probabilité d'occurrence d'un type de dégradation donné du moteur. L'alarme Al est typiquement levée après confirmation « CONF-TH » du respect d'une règle de dépassement de seuil.

Le procédé comprend en outre une étape de suivi de conditions de fonctionnement du moteur pour déterminer un taux d'usure Us du moteur, et une étape de confirmation d'alarme « CONF-AL » au cours de laquelle ladite probabilité d'occurrence est pondérée par le taux d'usure déterminé, fournissant ainsi une alarme corrigée Al*.

L'étape de suivi de conditions de fonctionnement du moteur met en œuvre une opération « Nom » de détermination d'un taux d'usure de mode nominal Uₛ₋ₙ du moteur. Elle comprend également une opération « Deg » de détermination du temps passé par le moteur dans des conditions critiques de fonctionnement depuis sa première mise en fonctionnement pour en déduire un taux d'usure de mode dégradé U_{s-d}, ainsi qu'une opération « DET-U » de détermination du taux d'usure du moteur en ajoutant le taux d'usure de mode dégradé au taux d'usure de mode nominal.

L'invention s'étend également à un produit programme d'ordinateur comprenant des instructions de code pour l'exécution des étapes du procédé selon l'invention, lorsque ledit programme est exécuté sur un ordinateur.

## Revendications

1. Système de suivi de l'état de santé (1) d'un moteur d'aéronef sous surveillance (2), comprenant une unité de détection d'anomalies (3) configurée pour analyser des paramètres de fonctionnement du moteur et pour lever une alarme (Al) en cas de dépassement de seuil par un résultat d'analyse de l'un des paramètres de fonctionnement du moteur, l'alarme étant associée à une probabilité d'occurrence d'un type de dégradation donné du moteur,
**caractérisé en ce qu'**il comprend une unité de suivi de conditions de fonctionnement du moteur (4) configurée pour déterminer un taux d'usure du moteur, et une unité de confirmation d'alarme (5) configurée pour pondérer ladite probabilité d'occurrence par le taux d'usure déterminé.

2. Système selon la revendication 1, dans lequel l'unité de détection d'anomalies (3) est configurée pour lever une alarme (Al) si un résultat d'analyse de l'un des paramètres de fonctionnement du moteur respecte une règle de confirmation de dépassement de seuil.

3. Système selon la revendication 2, dans lequel la règle de dépassement de seuil correspond à la détection d'un dépassement de seuil lors de k cycles de fonctionnement au cours de la durée de vie du moteur, k étant un entier naturel positif.

4. Système selon la revendication 2, dans lequel la règle de dépassement de seuil correspond à la détection d'un dépassement de seuil lors de k cycles de fonctionnement successifs du moteur, k étant un entier naturel positif.

5. Système selon la revendication 2, dans lequel la règle de dépassement de seuil correspond à la détection d'un dépassement de seuil sur k cycles de fonctionnement parmi n cycles de fonctionnement successifs du moteur, k et n étant des entiers naturels positifs, n étant supérieur à k.

6. Système selon l'une des revendications 1 à 5, dans lequel l'unité de suivi de conditions de fonctionnement du moteur (4) est configurée pour déterminer l'âge du moteur depuis sa première mise en fonctionnement et en déduire un taux d'usure de mode nominal, pour déterminer le temps passé par le moteur dans des conditions critiques de fonctionnement depuis sa première mise en fonctionnement et en déduire un taux d'usure de mode dégradé, et pour déduire le taux d'usure du moteur en combinant le taux d'usure de mode dégradé avec le taux d'usure de mode nominal.

7. Système selon la revendication 6, dans lequel les conditions critiques de fonctionnement comprennent au moins un fonctionnement parmi un fonctionnement en dehors d'une gamme nominale de température, un fonctionnement en dehors d'une gamme nominale d'hygrométrie, un fonctionnement en dehors d'une gamme nominale de pression et un fonctionnement en contact avec des produits corrosifs.

8. Système selon l'une des revendications 1 à 7, dans lequel le moteur est une turbomachine.

9. Procédé de suivi de l'état de santé d'un moteur d'aéronef sous surveillance (2), comprenant une étape de détection d'anomalies qui comporte une analyse de paramètres de fonctionnement du moteur et une levée d'alarme (Al) en cas de dépassement de seuil par un résultat d'analyse de l'un des paramètres de fonctionnement du moteur, l'alarme étant associée à une probabilité d'occurrence d'un type de dégradation donné du moteur,
**caractérisé en ce qu'**il comprend une outre une étape de suivi de conditions de fonctionnement du moteur (4) au cours de laquelle un taux d'usure du moteur est déterminée, et une étape de confirmation d'alarme (5) au cours de laquelle ladite probabilité d'occurrence est pondérée par le taux d'usure déterminé.

10. Produit programme d'ordinateur comprenant des instructions de code pour l'exécution des étapes du procédé selon la revendication 9, lorsque ledit programme est exécuté sur un ordinateur.

## Patentansprüche

1. System zur Verfolgung des Zustandes (1) eines Flugzeugmotors unter Überwachung (2), mit einer Einheit zur Anomalitätserkennung (3), die zur Analyse von Betriebsparametern des Motors und zur Auslösung eines Alarms (Al) im Falle einer Überschreitung einer Schwelle durch ein Analyseergebnis des einen der Betriebsparameter des Motors konfiguriert ist, wobei der Alarm mit einer Wahrscheinlichkeit des Auftretens einer bestimmten Art von Motorbeeinträchtigung verbunden ist,
**dadurch gekennzeichnet, dass** es eine Einheit zur Verfolgung von Betriebsbedingungen des Motors (4), die dazu konfiguriert ist, eine Verschleißrate des Motors zu bestimmen, sowie eine Einheit zur Alarmbestätigung (5) aufweist, die dazu konfiguriert ist, die Wahrscheinlichkeit des Auftretens mit der bestimmten Verschleißrate zu gewichten.

2. System nach Anspruch 1, wobei die Einheit zur Anomalitätserkennung (3) dazu konfiguriert ist, einen Alarm (Al) auszulösen, wenn ein Analyseergebnis des einen der Betriebsparameter des Motors eine Regel zur Bestätigung der Schwellenüberschreitung erfüllt.

3. System nach Anspruch 2, wobei die Regel zur Schwellenüberschreitung der Erkennung einer Schwellenüberschreitung während k Betriebszyklen im Laufe der Lebensdauer des Motors entspricht, wobei k eine positive natürliche Zahl ist.

4. System nach Anspruch 2, wobei die Regel zur Schwellenüberschreitung der Erkennung einer Schwellenüberschreitung während k aufeinanderfolgenden Betriebszyklen des Motors entspricht, wobei k eine positive natürliche Zahl ist.

5. System nach Anspruch 2, wobei die Regel zur Schwellenüberschreitung der Erkennung einer Schwellenüberschreitung über k Betriebszyklen aus n aufeinanderfolgenden Betriebszyklen des Motors entspricht, wobei k und n positive natürliche Zahlen sind und wobei n größer als k ist.

6. System nach einem der Ansprüche 1 bis 5, wobei die Einheit zur Überwachung von Betriebsbedingungen des Motors (4) dazu konfiguriert ist, das Alter des Motors ab seiner ersten Inbetriebnahme zu bestimmen und daraus eine Verschleißrate eines Normalbetriebes abzuleiten, um die Zeit zu bestimmen, die der Motor ab seiner ersten Inbetriebnahme unter kritischen Betriebsbedingungen durchlaufen hat, und daraus eine Verschleißrate eines Notbetriebes abzuleiten, und um die Verschleißrate des Motors durch eine Kombination der Verschleißrate eines Notbetriebes mit der Verschleißrate eines Normalbetriebes abzuleiten.

7. System nach Anspruch 6, wobei die kritischen Betriebsbedingungen mindestens einen Betrieb aus einem Betrieb außerhalb eines nominalen Temperaturbereiches, einem Betrieb außerhalb eines nominalen Feuchtigkeitsbereiches, einem Betrieb außerhalb eines nominalen Druckbereiches sowie einem Betrieb in Kontakt mit korrodierenden Produkten umfassen.

8. System nach einem der Ansprüche 1 bis 7, wobei der Motor eine Turbomaschine ist.

9. Verfahren zur Verfolgung des Zustandes eines Flugzeugmotors unter Überwachung (2), mit einem Schritt der Erkennung von Anomalitäten, der eine Analyse von Betriebsparametern des Motors sowie eine Alarmauslösung (Al) im Falle einer Schwellenüberschreitung durch ein Analyseergebnis eines der Betriebsparameter des Motors umfasst, wobei der Alarm mit einer Wahrscheinlichkeit des Auftretens einer bestimmten Art von Motorbeeinträchtigung verbunden ist,
**dadurch gekennzeichnet, dass** es außerdem einen Schritt zur Verfolgung von Betriebsbedingungen des Motors (4), in welchem eine Verschleißrate des Motors bestimmt wird, sowie einen Schritt zur Bestätigung eines Alarms (5) aufweist, in welchem die Wahrscheinlichkeit des Auftretens mit der bestimmten Verschleißrate gewichtet wird.

10. Computerprogramm-Produkt mit Codeanweisungen für die Ausführung der Schritte des Verfahrens nach Anspruch 9, wenn das Programm auf einem Computer ausgeführt wird.

## Claims

1. A health monitoring system (1) for an aircraft engine under observation (2), comprising an anomaly detection unit (3) configured to analyse operating parameters of the engine and raise an alarm (Al) in case of threshold exceedance by an analysis result of one of the operating parameters of the engine, the alarm being associated with a probability of occurrence of a given degradation type of the engine,
**characterised in that** it comprises an engine operating condition monitoring unit (4) configured to determine an engine wear rate, and an alarm confirmation unit (5) configured to weight said probability of occurrence with the determined wear rate.

2. The system according to claim 1, wherein the anomaly detection unit (3) is configured to raise an alarm (Al) if an analysis result of one of the operating parameters of the engine complies with a threshold exceedance confirmation rule.

3. The system according to claim 2, wherein the threshold exceedance rule corresponds to the detection of a threshold exceedance during k operating cycles during the lifetime of the engine, k being a positive integer.

4. The system according to claim 2, wherein the threshold exceedance rule corresponds to the detection of a threshold exceedance during k successive operating cycles of the engine, k being a positive integer.

5. The system according to claim 2, wherein the threshold exceedance rule corresponds to the detection of a threshold exceedance on k operating cycles among n successive operating cycles of the engine, k and n being positive integers, n being higher than k.

6. The system according to one of claims 1 to 5, wherein the engine operating condition monitoring unit (4) is configured to determine the age of the engine since it has been first operated and deduce therefrom a nominal mode wear rate, to determine the time spent by the engine under critical operating conditions since it has been first operated and deduce therefrom a degraded mode wear rate, and to deduce the engine wear rate by combining the degraded mode wear rate with the nominal mode wear rate.

7. The system according to claim 6, wherein the critical operating conditions comprise at least one operation among an operation outside a nominal temperature range, an operation outside a nominal hygrometry range, an operation outside a nominal pressure range and an operation in contact with corrosive products.

8. The system according to one of claims 1 to 7, wherein the engine is a turbomachine.

9. A method for monitoring the health of an aircraft engine under observation (2), comprising a step of detecting anomalies which includes an analysis of operating parameters of the engine and an alarm raising (Al) in case of threshold exceedance by an analysis result of one of the operating parameters of the engine, the alarm being associated with a probability of occurrence of a given degradation type of the engine, **characterised in that** it further comprises a step of monitoring operating conditions of the engine (4) during which a wear rate of the engine is determined, and an alarm confirmation step (5) during which said probability of occurrence is weighted with the wear rate determined.

10. A computer program product comprising code instructions for executing the steps of the method according to claim 9, when said program is run on a computer.
